# EUROPEAN PATENT APPLICATION

(11) **EP 4 513 524 A1**
(43) Date of publication of application: **26.02.2025**
(21) Application number: 23791767.9
(22) Date of filing: 12.04.2023
(51) Int. Cl.: H01H 85/10, H01H 85/36

(54) **PROTECTIVE ELEMENT**

(30) Priority: 20.04.2022 JP 2022069360
(71) Applicant: Dexerials Corporation, Shimotsuke-shi, Tochigi 323-0194 (JP)
(72) Inventor: WADA Yutaka, Shimotsuke-shi, Tochigi 323-0194 (JP); YONEDA Yoshihiro, Shimotsuke-shi, Tochigi 323-0194 (JP); UCHIDA Syunsuke, Shimotsuke-shi, Tochigi 323-0194 (JP)
(74) Representative: Lavoix
(86) International application number: PCT/JP2023/014860
(87) International publication number: WO 2023/204119

(57) **Abstract**

A protective element includes a fuse element having a cut portion between a first end portion and a second end portion and electrified in a first direction from the first end portion toward the second end portion; a movable member, having a projection portion, and a recessed member having a recessed portion allowing the projection portion to be inserted therein, which are disposed facing each other such that the cut portion is sandwiched therebetween; and a pressing means applying a force so as to shorten a relative distance in a direction in which the cut portion is sandwiched between the movable member and the recessed member. The cut portion is cut due to the force of the pressing means at a temperature equal to or higher than a softening temperature of the fuse element. The cut portion of the fuse element has one of or both a penetration hole and a thin portion in at least part thereof.

## Description

### TECHNICAL FIELD

The present invention relates to a protective element.

Priority is claimed on Japanese Patent Application No. 2022-069360, filed April 20, 2022, the content of which is incorporated herein by reference.

### BACKGROUND ART

In the related art, there are fuse elements which generate heat and melt to block a current path when a current exceeding a rated value flows. A protective element (fuse device) including the fuse element is used in a battery pack using a lithium-ion secondary battery, for example.

In recent years, lithium-ion secondary batteries have been used in a wide range of fields, including not only mobile instruments but also electric vehicles, storage batteries, and the like. For this reason, capacities of lithium-ion secondary batteries are being increased. Along with this, there is a demand for a protective element which is installed in a battery pack having large-capacity lithium-ion batteries and high-voltage/large-current current paths.

In a protective element installed in a battery pack having high-voltage/large-current current paths, there is a tendency for arc discharge to be likely to occur when a fuse element is cut. For this reason, there is a demand for a protective element in which occurrence of arc discharge can be reduced and continuation of arc discharge that has occurred can be curbed. Regarding such a protective element, for example, there is a known protective element including a fuse element having a cut portion; a movable member having a projection portion, and a recessed member, having a recessed portion allowing the projection portion to be inserted therein, which are disposed facing each other such that the cut portion is sandwiched therebetween; and a pressing means applying a force so as to shorten a relative distance in a direction in which the cut portion is sandwiched between the movable member and the recessed member (Patent Document 1). In this protective element, the cut portion is cut due to a force of the pressing means when the temperature of the cut portion of the fuse element reaches or exceeds a softening temperature. Patent Document 1 describes that a heat generation member is disposed in the vicinity of the cut portion and the heat generation member is caused to generate heat in order to make the cut portion of the fuse element easier to soften even in the event of an abnormality other than a flow of a current exceeding a rated value. In addition, Patent Document 1 describes that the width of the cut portion of the fuse element is narrowed as a method for making the cut portion of the fuse element easier to soften when a current exceeding a rated value flows.

### Citation List

### Patent Document

Patent Document 1: Japanese Unexamined Patent Application, First Publication No. 2021-190294

### SUMMARY OF INVENTION

### Technical Problem

As described in Patent Document 1, narrowing the width of a cut portion of a fuse element is an effective method for making the cut portion more likely to soften. However, narrowing the width of the cut portion may cause the cut portion of the fuse element to be cut due to a temperature environment such as a cooling/heating cycle (for example, -40°C to +100°C), a high-temperature/high-humidity condition, a high temperature, or a low temperature.

The present invention has been made in consideration of the foregoing circumstances, and an object thereof is to provide a protective element in which occurrence of arc discharge can be reduced, continuation of arc discharge that has occurred can be curbed, and a cut of a cut portion of a fuse element due to a temperature environment is unlikely to occur.

### Solution to Problem

In order to resolve the foregoing problems, the following means is proposed.

[1] A protective element is provided including a fuse element having a cut portion between a first end portion and a second end portion and electrified in a first direction from the first end portion toward the second end portion; a movable member, having a projection portion, and a recessed member having a recessed portion allowing the projection portion to be inserted therein, which are disposed facing each other such that the cut portion is sandwiched therebetween; and a pressing means applying a force so as to shorten a relative distance in a direction in which the cut portion is sandwiched between the movable member and the recessed member. The cut portion is cut due to the force of the pressing means at a temperature equal to or higher than a softening temperature of the fuse element.
   The cut portion of the fuse element has one of or both a penetration hole and a thin portion in at least part thereof.
[2] In the protective element according to [1], largest diameters of the penetration hole and the thin portion are within a range of 15% to 25% of a length of the cut portion in a second direction orthogonal to the first direction.
[3] In the protective element according to [1] or [2], the fuse element has a thick portion having a larger thickness than a flat surface part of the cut portion excluding the penetration hole and the thin portion in at least a part other than the cut portion.
[4] In the protective element according to [3], the thickness of the thick portion is within a range of 150% to 250% with respect to the thickness of the flat surface part of the cut portion.
[5] In the protective element according to [3] or [4], a length of the thick portion in a second direction orthogonal to the first direction is longer than a length of the cut portion in the second direction.
[6] In the protective element according to [5], the length of the thick portion in the second direction is within a range of 120% to 160% with respect to the length of the cut portion in the second direction.
[7] In the protective element according to any one of [1] to [6], the cut portion is disposed on an inward side of the recessed portion of the recessed member in a plan view and is disposed at a position close to an inner surface of the recessed portion of the recessed member in a plan view.
[8] In the protective element according to [1] or [2], the fuse element is a laminate having an inner layer made of a low-melting point metal and an outer layer made of a high-melting point metal.
[9] In the protective element according to [8], the low-melting point metal is constituted of Sn or a metal having Sn as a main component, and the high-melting point metal is constituted of Ag or Cu or a metal having Ag or Cu as a main component.
[10] In the protective element according to any one of [3] to [6], part of the thick portion having a larger thickness than the flat surface part of the cut portion is constituted of Sn or a metal having Sn as a main component, or Ag or Cu or a metal having Ag or Cu as a main component.
[11] In the protective element according to any one of [1] to [10], the pressing means is a spring.
[12] In the protective element according to [11], the spring is a conical spring and is disposed with a side having a smaller outer diameter facing the cut portion side.
[13] In the protective element according to any one of [1] to [12], the projection portion of the movable member is disposed at a position where an outer circumference overlaps at least part of an area on an inward side of the recessed portion of the recessed member in a plan view. When the cut portion is cut, the projection portion is inserted into the recessed portion.
[14] In the protective element according to any one of [1] to [13], a first terminal is electrically connected to the first end portion, and a second terminal is electrically connected to the second end portion.
[15] The protective element according to any one of [1] to [14] further includes a heat generation member disposed in contact with or disposed at a position close to the cut portion on the pressing means side or the recessed member side of the fuse element.
[16] In the protective element according to [15], the heat generation member is disposed on an inward side of the recessed portion of the recessed member in a plan view.
[17] In the protective element according to [15] or [16], a length of the heat generation member in the first direction is shorter than a length of the recessed portion in a third direction intersecting the second direction intersecting the first direction and the first direction.
[18] In the protective element according to any one of [15] to [17], the heat generation member has a resistor, and the resistor is disposed close to the cut portion side of the heat generation member.
[19] In the protective element according to [18], the resistor is in contact with the fuse element in the second direction intersecting the first direction or is in contact with the fuse element in the second direction intersecting the first direction via the heat generation member.
[20] In the protective element according to any one of [15] to [19], the heat generation member is electrically connected to a third terminal or the third terminal and a fourth terminal through a power supply member, and the resistor generates heat due to electrification via the power supply member.
[21] The protective element according to any one of [1] to [20] further includes a case constituted of a plurality of members in which at least the fuse element, the movable member, the recessed portion of the recessed member, and the pressing means are accommodated. The pressing means is accommodated inside the case in a state in which a force is applied such that a relative distance in a direction in which the cut portion is sandwiched between the movable member and the recessed member is shortened.
[22] In the protective element according to [21], one member of the case has an accommodation portion in which a first inner wall surface and a second inner wall surface facing each other in an extension/contraction direction of the pressing means and side wall surfaces connecting the first inner wall surface and the second inner wall surface are integrally formed of the same member. In a state in which the fuse element is not cut, stress inside the case occurring due to the pressing means is supported and held by the first inner wall surface, the side wall surfaces, and the second inner wall surface in a clamp shape.
[23] In the protective element according to [21] or [22], the recessed member and the case are made of nylon or ceramics.
[24] In the protective element according to any one of [1] to [23], the cut portion is disposed inside the recessed portion of the recessed member in a plan view and is disposed at a position close to an inner surface of the recessed portion in a plan view. The movable member is at a position where an outer circumference overlaps at least part of an area on an inward side of the recessed portion in a plan view, and the projection portion is disposed at a position overlapping part of the cut portion. When the cut portion of the fuse element is cut, the projection portion is inserted into the recessed portion, and part of the fuse element is accommodated inside the recessed portion in a bent manner.

### Advantageous Effects of Invention

According to the present invention, it is possible to provide a protective element in which occurrence of arc discharge can be reduced, continuation of arc discharge that has occurred can be curbed, and a cut of a cut portion of a fuse element due to a temperature environment is unlikely to occur.

### BRIEF DESCRIPTION OF DRAWINGS

FIG. 1 is a diagram showing an appearance of a protective element according to an embodiment of the present invention. FIG. 1(a) is a plan view, FIG. 1(b) is a side view seen in an X direction, FIG. 1(c) is a side view seen in a Y direction, and FIG. 1(d) is a perspective view.
FIG. 2 is a cross-sectional view along line A-A' in FIG. 1(a).
FIG. 3 is a cross-sectional view along line B-B' in FIG. 1(a).
FIG. 4 is a perspective view in a state in which a case of the protective element shown in FIG. 1 is removed.
FIG. 5 is an exploded perspective view of the protective element shown in FIG. 1.
FIG. 6 is a diagram showing a fuse element used in the protective element shown in FIG. 1. FIG. 6(a) is a plan view, and FIG. 6(b) is a cross-sectional view along line VI(b)-VI(b)' in FIG. 6(a).
FIG. 7 is a diagram showing a heat generation member used in the protective element shown in FIG. 1. FIG. 7(a) is a plan view, and FIG. 7(b) is a cross-sectional view along line VII(b)-VII(b)' in FIG. 7(a).
FIG. 8 is a diagram showing a movable member used in the protective element shown in FIG. 1. FIG. 8(a) is a plan view, FIG. 8(b) is a side view seen in the X direction, FIG. 8(c) is a side view seen in the Y direction, FIG. 8(d) is a bottom view, FIG. 8(e) is a perspective view seen from a flat surface side, and FIG. 8(f) is a perspective view seen from a lower surface side.
FIG. 9 is a diagram showing a recessed member used in the protective element shown in FIG. 1. FIG. 9(a) is a plan view, FIG. 9(b) is a side view seen in the X direction, FIG. 9(c) is a side view seen in the Y direction, FIG. 9(d) is a bottom view, and FIG. 9(e) is a perspective view.
FIG. 10 is a diagram showing a first case and a second case used in the protective element shown in FIG. 1. FIG. 10(a) is a plan view, FIG. 10(b) is a side view seen in the X direction, FIG. 10(c) is a side view seen in the Y direction, FIG. 10(d) is a bottom view, and FIG. 10(e) is a perspective view.
FIG. 11 is a diagram showing a state after a cut portion of the fuse element is cut in the protective element shown in FIG. 1 and is a cross-sectional view corresponding to FIG. 2.
FIG. 12 is a diagram showing a state after the cut portion of the fuse element is cut in the protective element shown in FIG. 1 and is a cross-sectional view corresponding to FIG. 3.
FIG. 13 is a diagram showing a modification example of a fuse element used in the protective element according to the present invention. FIG. 13(a) is a plan view, and FIG. 13(b) is a cross-sectional view along line XIII(b)-XIII(b)' in FIG. 13(a).
FIG. 14 is a diagram showing another modification example of a fuse element used in the protective element according to the present invention. FIG. 14(a) is a plan view, and FIG. 14(b) is a cross-sectional view along line XIV(b)-XIV(b)' in FIG. 14(a).
FIG. 15 is a diagram showing still another modification example of a fuse element used in the protective element according to the present invention. FIG. 15(a) is a plan view, and FIG. 15(b) is a cross-sectional view along line XV(b)-XV(b)' in FIG. 15(a).
FIG. 16 is a diagram showing a modification example of a heat generation member used in the protective element according to the present invention. FIG. 16(a) is a plan view, and FIG. 16(b) is a cross-sectional view along line XVI(b)-XVI(b)' in FIG. 16(a).

### DESCRIPTION OF EMBODIMENTS

Hereinafter, an embodiment of the present invention will be described in detail suitably with reference to the drawings. In the drawings used in the following description, in order to make characteristics easy to understand, characteristic portions may be shown in an enlarged manner for the sake of convenience, and dimensional ratios or the like of each constituent element may differ from actual values thereof. Materials, dimensions, and the like shown in the following description are merely exemplary examples. The present invention is not limited thereto and can be suitably changed and performed within a range in which the effects of the present invention are exhibited.

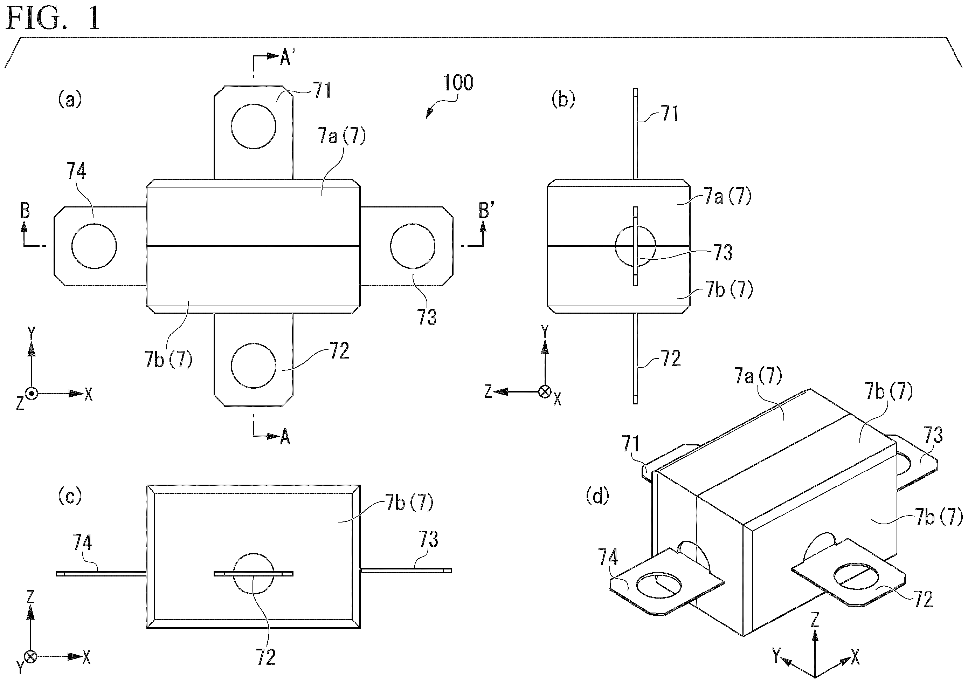

FIGS. 1 to 5 are schematic views showing a protective element 100 according to the embodiment of the present invention. The protective element 100 of the present embodiment has substantially a rectangular shape in a plan view. In the drawings used in the following description, the direction indicated by X is a longitudinal direction of the protective element 100. In addition, in the drawings used in the following description, the direction indicated by Y is a direction (first direction) orthogonal to the X direction (second direction), and the direction indicated by Z is a direction (third direction) orthogonal to the X direction and the Y direction.

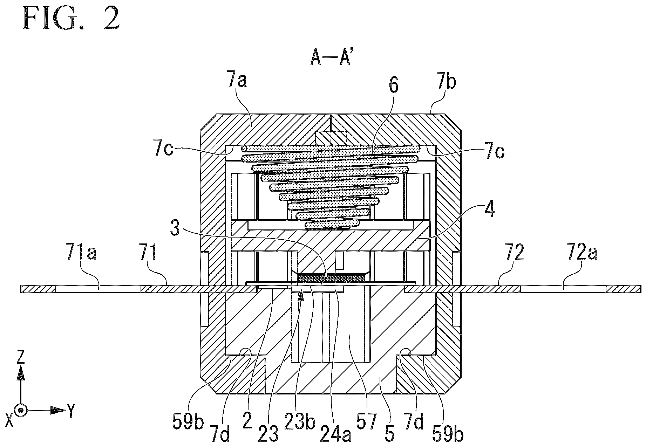

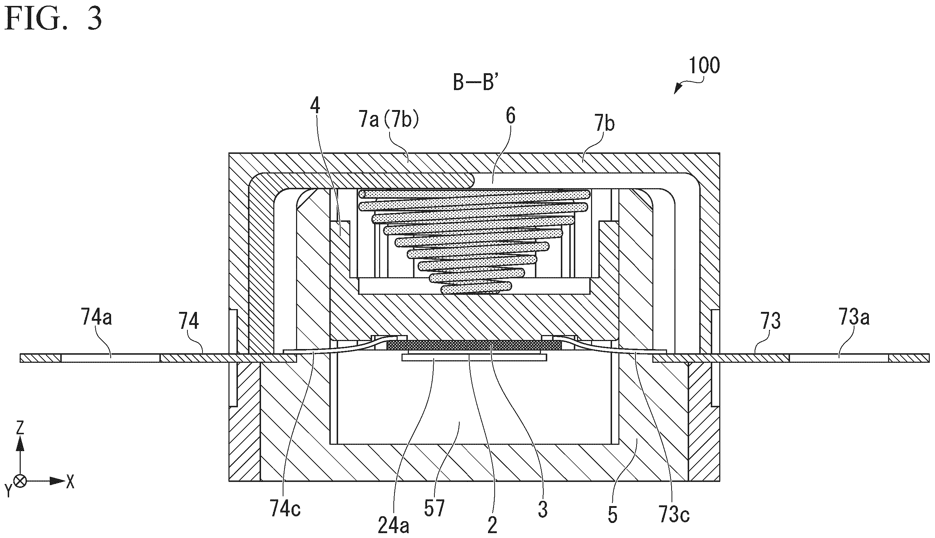

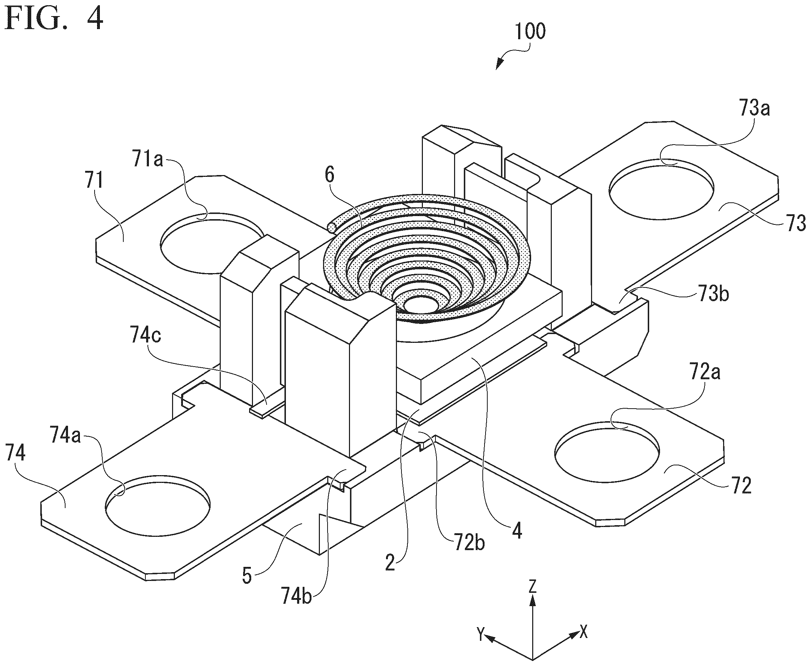

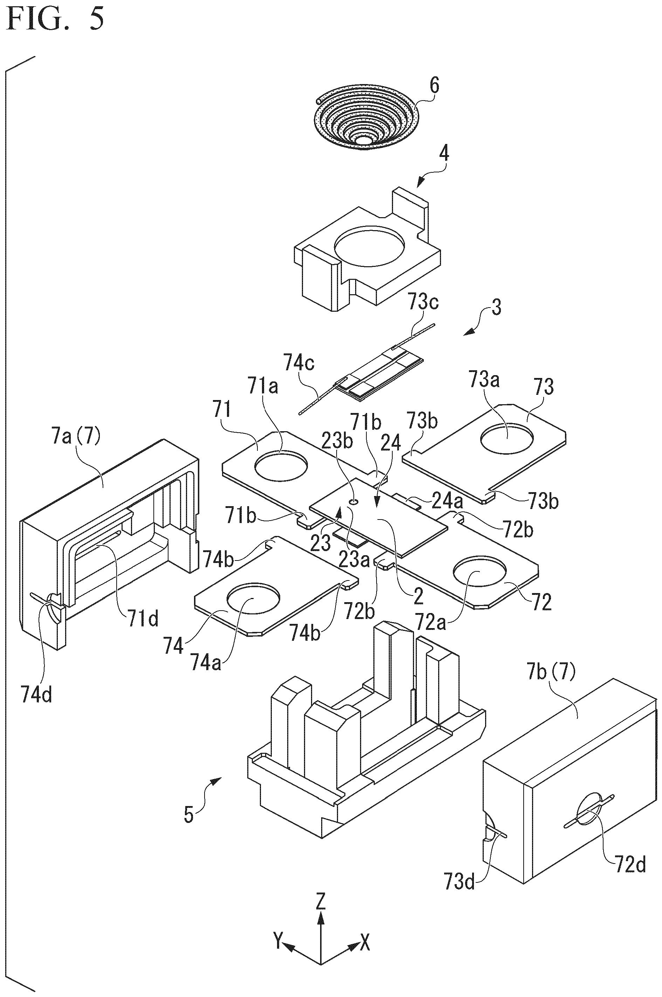

FIG. 1 is a diagram showing an appearance of the protective element 100 according to the embodiment of the present invention. FIG. 1(a) is a plan view, FIG. 1(b) is a side view seen in the X direction, FIG. 1(c) is a side view seen in the Y direction, and FIG. 1(d) is a perspective view. FIG. 2 is a cross-sectional view along line A-A' in FIG. 1(a), and FIG. 3 is a cross-sectional view along line B-B' in FIG. 1(a). FIG. 4 is a perspective view in a state in which a case of the protective element 100 is removed. FIG. 5 is an exploded perspective view of the protective element 100.

As shown in FIGS. 1 to 5, the protective element 100 of the present embodiment includes a fuse element 2 having a cut portion 23, a heat generation member 3, a movable member 4, a recessed member 5, a pressing means 6, and a case 7.

### (Fuse element)

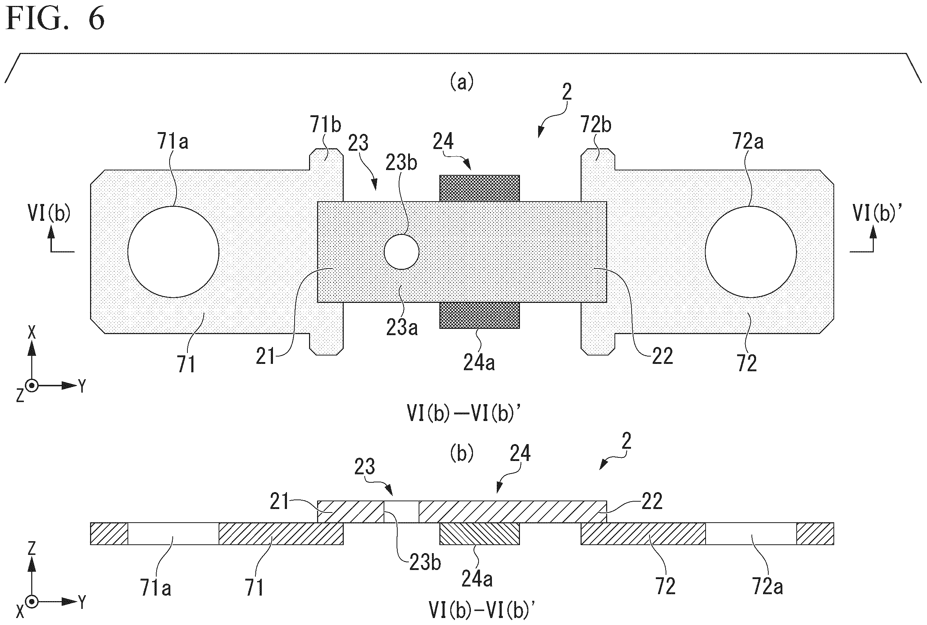

FIG. 6 is a diagram showing the fuse element 2 used in the protective element 100 of the present embodiment. FIG. 6(a) is a plan view of the fuse element 2, and FIG. 6(b) is a cross-sectional view along line VI(b)-VI(b)' in FIG. 6(a). As shown in FIG. 6, the fuse element 2 has a first end portion 21, a second end portion 22, and the cut portion 23 which is provided between the first end portion 21 and the second end portion 22. The first end portion 21 is electrically connected to a first terminal 71. The second end portion 22 is electrically connected to a second terminal 72. The fuse element 2 is electrified in the Y direction (first direction) that is a direction from the first end portion 21 toward the second end portion 22. When the protective element 100 is used, the fuse element 2 may be electrified from the first end portion 21 toward the second end portion 22 or may be electrified from the second end portion 22 toward the first end portion 21.

The fuse element 2 has a rectangular shape in a plan view, and the widths of the cut portion 23, the first end portion 21, and the second end portion 22 are the same. Since the widths of the cut portion 23, the first end portion 21, and the second end portion 22 are the same, the fuse element 2 has an improved strength so that a cut of the cut portion 23 due to a temperature environment such as a cooling/heating cycle, a high-temperature/high-humidity condition, a high temperature, or a low temperature is unlikely to occur.

In the fuse element 2, the cut portion 23 is cut at a temperature equal to or higher than a softening temperature. The cut portion 23 of the fuse element 2 is a cutting-scheduled portion which is scheduled to be cut at a temperature equal to or higher than the softening temperature. In a normal state, the cut portion 23 is not cut, and the fuse element 2 can be electrified. In this specification, "a softening temperature" denotes a temperature or a temperature range in which a solid phase and a liquid phase are mixed or coexist. The softening temperature is a temperature or a temperature zone (temperature range) in which the fuse element 2 becomes soft enough to be deformed due to an external force.

The cut portion 23 of the fuse element 2 has a flat surface portion 23a and a penetration hole 23b. The flat surface portion 23a is part in which a penetration hole or a thin portion is not formed. Since no current flows in the penetration hole 23b, the cut portion 23 has a larger electrification amount per unit area than parts other than the cut portion 23. For this reason, when a current exceeding a rated value flows, the heat generation amount of the cut portion 23 increases compared to the parts other than the cut portion 23. Thus, the cut portion 23 becomes likely to soften. There is no particular limitation on the shape of the penetration hole 23b. For example, it can have a circular shape, an elliptical shape, or a polygonal shape. It is preferable that the position of the penetration hole 23b be a position not in contact with an end portion of the fuse element 2. It is preferable that the penetration hole 23b be disposed at the center in the X direction (second direction). It is preferable that the largest diameter of the penetration hole 23b be within a range of 15% to 25% of the length of the cut portion 23 in the X direction (second direction).

The fuse element 2 has a thick portion 24 having a larger thickness than the flat surface portion 23a in at least part other than the penetration hole 23b of the cut portion 23. The flat surface portion 23a is a part excluding the penetration hole 23b of the cut portion 23. The electrification amount per unit area of the thick portion 24 is smaller than that of the cut portion 23. For this reason, when a current exceeding a rated value flows, the heat generation amount of the thick portion 24 decreases compared to parts other than the thick portion 24. The thick portion 24 has a function of absorbing heat of the parts other than the cut portion 23 of the fuse element 2 to prevent the parts other than the cut portion 23 from softening. It is preferable that the thickness of the thick portion 24 be within a range of 150% to 250% with respect to the thickness of the flat surface portion 23a of the cut portion 23. The length of the thick portion 24 in the X direction (second direction) may be longer than the length of the cut portion 23 in the second direction. In this case, it is preferable that the length of the thick portion 24 in the X direction (second direction) be within a range of 120% to 160% with respect to the length of the cut portion 23 in the X direction (second direction). It is more preferable that the shortest distance between the cut portion 23 and the thick portion 24 be 1 mm to 3 mm. In the present embodiment, the thick portion 24 is formed by adhering the fuse element 2 and a metal foil 24a having a uniform thickness.

The fuse element 2 may be a single layer body or may be a laminate in which a plurality of layers are laminated.

When the fuse element 2 is a single layer body, a material used for known fuse elements, such as a metal material including an alloy, can be used as a material thereof. Specifically, examples of the material of the fuse element 2 include an alloy such as Pb 85%/Sn, or Sn/Ag 3%/Cu 0.5%.

When the fuse element 2 is a laminate, it is preferable to be a laminate having an inner layer made of a low-melting point metal and an outer layer made of a high-melting point metal. It is preferable to use Sn or a metal having Sn as a main component as the low-melting point metal. Since the melting point of Sn is 232°C, a metal having Sn as a main component has a low melting point and softens at a low temperature. For example, the solidus line of an alloy Sn/Ag 3%/Cu 0.5% is 217°C. It is preferable to use Ag or Cu or a metal having Ag or Cu as a main component as the high-melting point metal. For example, since the melting point of Ag is 962°C, the rigidity of a layer made of a metal having Ag as a main component is maintained at a temperature at which a layer made of a low-melting point metal softens. In this specification, "a main component" refers to a component having the highest mass content among all components.

Sn or a metal having Sn as a main component, or Ag or Cu or a metal having Ag or Cu as a main component can be used as a material of the metal foil 24a of the thick portion 24.

The first terminal 71 and the second terminal 72 connected to the fuse element 2 respectively include external terminal holes 71a and 72a. One of the external terminal hole 71a and the external terminal hole 72a is used for connection to a power source side, and the other is used for connection to a load side. The external terminal hole 71a and the external terminal hole 72a are penetration holes each having substantially a circular shape in a plan view. In addition, the first terminal 71 and the second terminal 72 respectively have flange portions 71b and 72b each having a width widened on both sides toward the fuse element 2 in an end portion on a side connected to the fuse element 2. When the first terminal 71 and the second terminal 72 have the flange portions 71b and 72b, the first terminal 71 and the second terminal 72 are unlikely to come out from opening portions 71d and 72d of the case 7, thereby realizing the protective element 100 having favorable reliability and durability. There is no particular limitation on the thicknesses of the first terminal 71 and the second terminal 72. For example, they can be within a range of 0.3 mm to 4.0 mm. The shapes of the first terminal 71 and the second terminal 72 are not limited to this. For example, the first terminal 71 and the second terminal 72 may have claw shapes partially having an open part. In addition, the first terminal 71 and the second terminal 72 may have substantially the same shapes or may have shapes different from each other.

For example, terminals made of copper, brass, nickel, or the like can be used as the first terminal 71 and the second terminal 72. Regarding the materials of the first terminal 71 and the second terminal 72, it is preferable to use brass from the viewpoint of strengthening the rigidity, and it is preferable to use copper from the viewpoint of reducing the electrical resistance. The first terminal 71 and the second terminal 72 may be made of the same materials or may be made of different materials.

### (Heat generation member)

The heat generation member 3 has a function of heating and softening the cut portion 23 of the fuse element 2 by generating heat through electrification. When an abnormality other than a flow of a current exceeding a rated value occurs, the heat generation member 3 is electrified, and therefore the cut portion 23 of the fuse element 2 can be made soft.

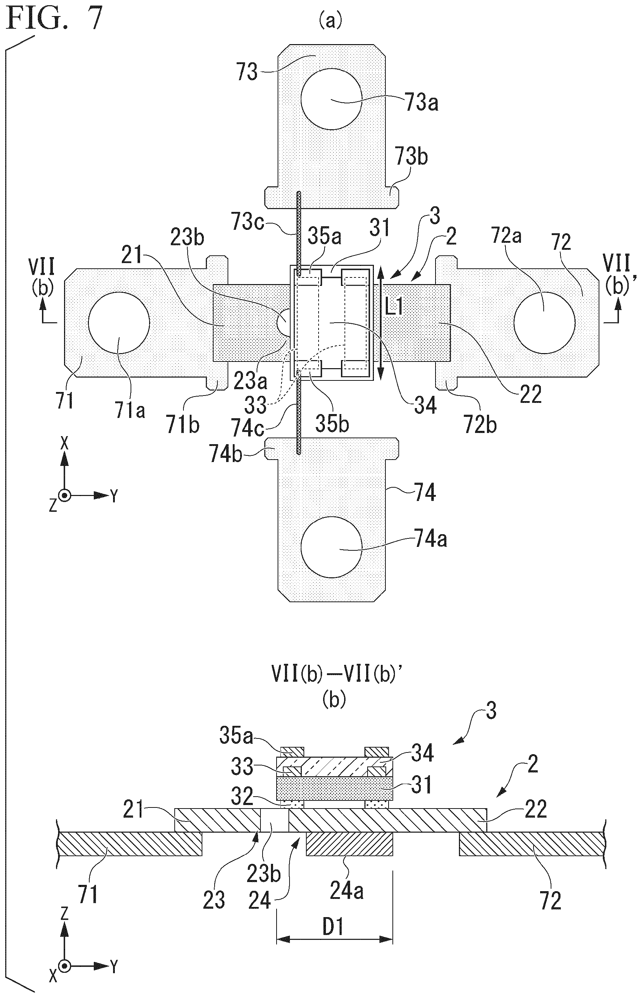

FIG. 7 is a diagram showing the heat generation member 3 used in the protective element 100 of the present embodiment. FIG. 7(a) is a plan view of the heat generation member 3, and FIG. 7(b) is a cross-sectional view along line VII(b)-VII(b)' in FIG. 7(a).

As shown in FIG. 7, the heat generation member 3 has an insulation substrate 31, heat transfer members 32 disposed on a surface of the insulation substrate 31 on the fuse element 2 side, resistors 33 disposed on a surface of the insulation substrate 31 on a side opposite to the fuse element 2, a protective layer 34 protecting the resistors 33, a first power supply portion 35a, and a second power supply portion 35b. The heat transfer members 32 and the resistors 33 are formed as a pair of strips extending in a direction orthogonal to the Y direction that is a direction from the first end portion 21 toward the second end portion 22. Both ends of the resistors 33 on the first terminal 71 side in the longitudinal direction are electrically connected to the first power supply portion 35a and the second power supply portion 35b, respectively. The first power supply portion 35a is electrically connected to a third terminal 73 via a power supply member 73c. The second power supply portion 35b is electrically connected to a fourth terminal 74 via a power supply member 74c. The protective layer 34 is disposed on the resistors 33 excluding a part in which the resistors 33 are connected to the first power supply portion 35a and the second power supply portion 35b and has a function of protecting the resistors 33. The heat generation member 3 is electrified in the X direction (second direction) that is a direction from the first power supply portion 35a toward the second power supply portion 35b. When the protective element 100 is used, the heat generation member 3 may be electrified from the first power supply portion 35a toward the second power supply portion 35b or may be electrified from the second power supply portion 35b toward the first power supply portion 35a. Both ends of the resistors 33 on the second terminal 72 side in the longitudinal direction may also be electrically connected to the first power supply portion 35a and the second power supply portion 35b, respectively. In addition, the resistors 33 on the second terminal 72 side may be omitted.

A substrate made of an insulation material can be used as the insulation substrate 31. Examples of the insulation material include alumina, glass ceramics, mullite, zirconia. For example, glass can be used as a material of the protective layer 34.

There is no particular limitation on the method for joining the heat generation member 3 and the fuse element 2. For example, at least one of the heat transfer member 32 on the first terminal 71 side and the heat transfer member 32 on the second terminal 72 side may be joined to the fuse element 2 using a joining material (not shown). Particularly, at least the heat transfer member 32 on the second terminal 72 side may be joined to the fuse element 2 using a joining material (not shown). A solder can be used as the joining material.

The heat transfer members 32 have a function of transferring heat generated in the resistors 33 to the cut portion 23 of the fuse element 2. Ni, Au, Ag, or Cu, or a metal material having Ni, Au, Ag, or Cu as a main component can be used as a material of the heat transfer members 32.

The resistors 33 generate heat through electrification. A high-resistance conductive material can be used as a material of the resistors 33. Examples of the high-resistance conductive material include materials containing a metal such as nichrome, W, Mo, or Ru.

A low-resistance conductive material can be used as materials of the first power supply portion 35a, the second power supply portion 35b, and the power supply members 73c and 74c. Examples of the low-resistance conductive material include Ag or Cu, or a metal having Ag or Cu as a main component.

The third terminal 73 and the fourth terminal 74 respectively have an external terminal hole 73a and an external terminal hole 74a, and flange portions 73b and 74b and have substantially the same shapes as the first terminal 71 and the second terminal 72. However, the shapes of the third terminal 73 and the fourth terminal 74 are not limited to this and need only be shapes which can engage with external terminals (not shown). For example, the shapes of the third terminal 73 and the fourth terminal 74 may be claw shapes partially having an open part. In addition, examples of the material used for the third terminal 73 and the fourth terminal 74 include materials similar to those of the first terminal 71 and the second terminal 72.

In the present embodiment, the heat generation member 3 is disposed in contact with the cut portion 23 of the fuse element 2. However, the position of the heat generation member 3 is not limited to this. The heat generation member 3 may be disposed at a position close to the cut portion 23 of the fuse element 2. For example, a position close to the cut portion 23 is a position where the shortest distance between the heat generation member 3 and the cut portion 23 becomes 1 mm or shorter.

### (Movable member)

The movable member 4 is a movable member having a function of applying a pressing force of the pressing means 6 to the cut portion 23 of the fuse element 2.

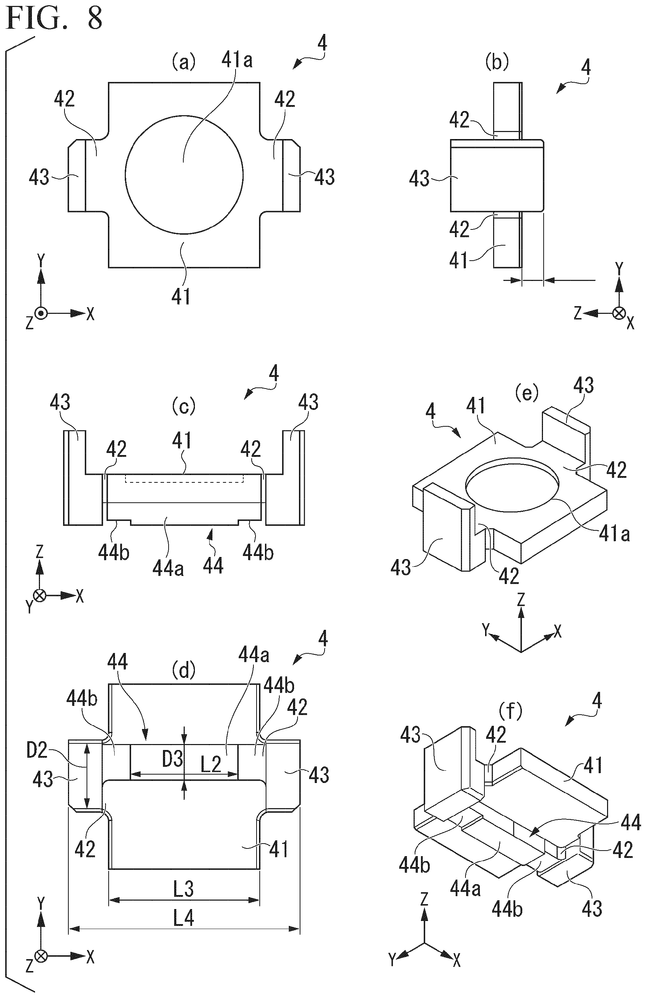

FIG. 8 is a diagram showing the movable member 4 used in the protective element 100 of the present embodiment. FIG. 8(a) is a plan view (a view seen from the pressing means 6 side), FIG. 8(b) is a side view seen in the X direction, FIG. 8(c) is a side view seen in the Y direction, FIG. 8(d) is a bottom view (a view seen from the fuse element 2 side), FIG. 8(e) is a perspective view seen from a flat surface side (pressing means 6 side), and FIG. 8(f) is a perspective view seen from a lower surface side (fuse element 2 side).

The movable member 4 has a base portion 41 having substantially a rectangular shape in a plan view. A pressing means storage region 41a is provided on an upper surface (a surface on the pressing means 6 side) of the base portion 41. An extension region 42 extending outward (in the X direction) is provided on each of a pair of side surfaces facing each other in four side surfaces of the base portion 41. A slide member 43 extending in the Z direction (third direction) stands on the outward side of each of the pair of extension regions 42. The slide member 43 has substantially a rectangular pillar shape in a plan view having the direction (Y direction) along an edge portion of the movable member 4 as a long side direction thereof. The slide member 43 functions as a guide for moving the movable member 4 to a predetermined position in the recessed member 5. The height of the slide member 43 (length in the Z direction) can be suitably determined in accordance with the shape of the pressing means 6.

A projection portion 44 protruding from the lower surface is provided on a lower surface (a surface on the fuse element 2 side) side of the base portion 41. The projection portion 44 is provided in a strip shape in a manner of connecting the pair of extension regions 42 of the movable member 4 to each other in a plan view. Therefore, a length L3 of the projection portion 44 is the same as the width of the base portion 41 of the movable member 4 in the X direction (FIG. 8(d)).

The projection portion 44 has a central portion 44a, and end portions 44b and 44b connected to both ends of the central portion 44a. The central portion 44a has a higher height than the end portions 44b and 44b. It is preferable that the central portion 44a be provided at a position overlapping lower side parts (parts in contact with the cut portion 23 of the fuse element 2) of the heat transfer members 32 of the heat generation member 3 in a plan view. It is preferable that each of the end portions 44b be provided at a position overlapping one of the first power supply portion 35a and the second power supply portion 35b of the heat generation member 3 in a plan view.

A width D3 (FIG. 8(d)) of the projection portion 44 is a width narrower than a width D2 (FIG. 8(d)) of the slide member 43. The width D3 (FIG. 8(d)) of the projection portion 44 is narrower than a width D1 (FIG. 7(b)) of the heat generation member 3 in the Y direction. Accordingly, pressing by the pressing means 6 is efficiently applied on the cut portion 23 of the fuse element 2 via the projection portion 44 of the movable member 4 and the heat generation member 3.

The ratio of the width D3 of the projection portion 44 to the width D1 of the heat generation member 3 in the Y direction (D3:D1) is preferably 1:1.2 to 1:5 and is more preferably 1:1.5 to 1:4. When the ratio of D3 to D1 is within the foregoing range, since D3 is sufficiently narrower than D1, a pressing force of the pressing means 6 can be efficiently transferred to the cut portion 23. In addition, when the ratio of D3 to D1 is within the foregoing range, this prevents the surface of the projection portion 44 on the fuse element 2 side and the surface of the fuse element 2 on the projection portion 44 side from being difficult to be disposed in a parallel manner due to excessively narrow D3, which is preferable. When the surface of the projection portion 44 on the fuse element 2 side and the surface of the fuse element 2 on the projection portion 44 side are disposed in a parallel manner, a pressing force of the pressing means 6 can be efficiently transferred to the cut portion 23.

The position of the end portion of the central portion 44a of the projection portion 44 is substantially the same as the position of a lower end of the slide member 43. The height of the projection portion 44 is shorter than the depth of a recessed portion 57 in the recessed member 5.

The proportion of the height of the projection portion 44 with respect to the depth of the recessed portion 57 (height of projection portion/ depth of recessed portion) is preferably 0.1 to 0.8 and is more preferably 0.2 to 0.6. If the proportion of height of projection portion/ depth of recessed portion is within the foregoing range, both cut end portions of the fuse element 2 are more reliably shielded from each other by the projection portion 44 which has entered the recessed portion 57. As a result, the distance between both cut end portions of the fuse element 2 increases so that continuation of arc discharge occurring when the fuse element 2 is cut can be curbed within a shorter period of time.

A length L2 (FIG. 8(d)) of the central portion 44a of the projection portion 44 is shorter than a length (a width in the X direction) L1 (FIG. 7(a)) of the heat generation member 3. Accordingly, pressing by the pressing means 6 is efficiently applied on the cut portion 23 of the fuse element 2 via the projection portion 44 of the movable member 4 and the heat generation member 3. Since the length L2 of the central portion 44a of the projection portion 44 allows pressing of the pressing means 6 to be uniformly applied to the cut portion 23, it preferably has dimensions equal to or larger than the width in the cut portion 23 in the X direction (second direction).

The movable member 4 is made of an insulation material which can maintain a hard state even at the softening temperature of the fuse element 2 or an insulation material which is not practically deformed. Specifically, a ceramic material, a resin material having a high glass transition temperature, or the like can be used as a material of the movable member 4.

Examples of the ceramic material include alumina, mullite, and zirconia, and it is preferable to use a material having a high heat conductivity, such as alumina. When the movable member 4 is formed of a material having a high heat conductivity, such as a ceramic material, heat generated when the fuse element 2 is cut can be efficiently dissipated to the outside, and continuation of arc discharge occurring when the fuse element 2 is cut is more effectively curbed.

Examples of the resin material having a high glass transition temperature include engineering plastics such as a polyphenylene sulfide (PPS) resin, a nylon-based resin, a fluorine-based resin, and a silicone-based resin. Among resin materials, a nylon-based resin is preferable because it has a high tracking resistance (a resistance to tracking (carbonized conductive path) destruction). Among nylon-based resins, particularly, it is preferable to use nylon 46, nylon 6T, or nylon 9T. It is preferable to use a nylon-based resin of which the tracking resistance is 250 V or higher, and it is more preferable to use a nylon-based resin of which the tracking resistance is 600 V or higher. The tracking resistance can be obtained by a test based on IEC 60112.

For example, the movable member 4 may be produced using a material other than a resin, such as a ceramic material, and part of the projection portion 44 may be covered with a nylon-based resin.

### (Recessed member)

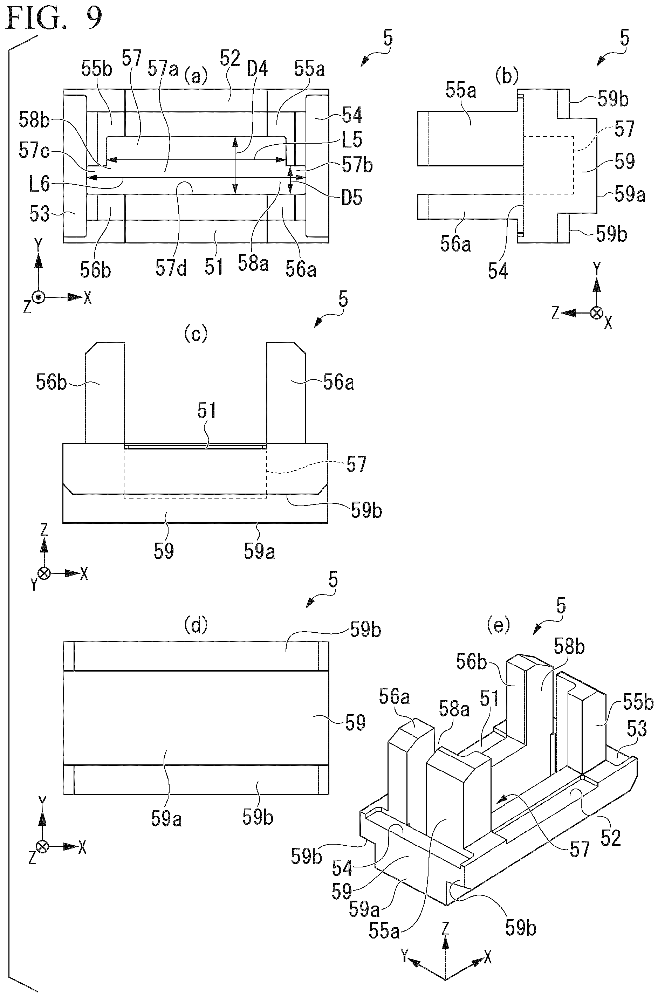

FIG. 9 is a diagram showing the recessed member 5 used in the protective element 100 of the present embodiment. FIG. 9(a) is a plan view (a view seen from the fuse element 2 side), FIG. 9(b) is a side view seen in the X direction, FIG. 9(c) is a side view seen in the Y direction, FIG. 9(d) is a bottom view, and FIG. 9(e) is a perspective view.

The recessed member 5 has substantially a rectangular shape in a plan view having the X direction as a long side direction thereof.

On an upper surface (a surface on the fuse element 2 side) side of the recessed member 5, terminal installation regions 51, 52, 53, and 54, the recessed portion 57, first guide members 55a and 55b, and second guide members 56a and 56b are provided.

The terminal installation regions 51, 52, 53, and 54 are substantially the same type and are constituted of flat surfaces lower than the surrounding height provided in a strip shape along each side of the recessed member 5 having substantially a rectangular shape in a plan view.

A coupling portion between the first end portion 21 of the fuse element 2 and the first terminal 71 is placed in the terminal installation region 51. The difference between the terminal installation region 51 and the surrounding height is the dimensions corresponding to the thickness of the first terminal 71. A coupling portion between the second end portion 22 of the fuse element 2 and the second terminal 72 is placed in the terminal installation region 52. The difference between the terminal installation region 52 and the surrounding height is the dimensions corresponding to the thickness of the second terminal 72. A coupling portion of the power supply member 73c of the third terminal 73 is placed in the terminal installation region 53. The difference between the terminal installation region 53 and the surrounding height is the dimensions corresponding to the thickness of the third terminal 73. A coupling portion of the power supply member 74c of the fourth terminal 74 is placed in the terminal installation region 54. The difference between the terminal installation region 54 and the surrounding height is the dimensions corresponding to the thickness of the fourth terminal 74.

The first guide members 55a and 55b and the second guide members 56a and 56b are disposed in contact with the terminal installation region 53 or the terminal installation region 54 on an inward side a region surrounded by the terminal installation regions 51, 52, 53, and 54 in a plan view. The first guide members 55a and 55b have substantially an L-pillar shape in a plan view. The second guide members 56a and 56b have substantially a rectangular pillar shape in a plan view. The first guide members 55a and 55b are disposed with a gap therebetween in a direction along the long sides (X direction) of the recessed member 5. The second guide members 56a and 56b are disposed with a gap with respect to the first guide members 55a and 55b and with a gap therebetween in a direction along the long sides (X direction) of the recessed member 5.

The heights of the first guide members 55a and 55b and the second guide members 56a and 56b (length from the upper surface in the Z direction) are substantially the same. The heights of the first guide members 55a and 55b and the second guide members 56a and 56b can be suitably determined in accordance with the shape of the case 7.

The recessed portion 57 is provided in a central portion of the recessed member 5 in a plan view. The recessed portion 57 is within a quadrangular area having the first guide members 55a and 55b and the second guide members 56a and 56b as corner portions thereof in a plan view. A space between part of the first guide member 55a cut to form an L-shape and the second guide member 56a forms a rail 58a of the slide member 43 of the movable member 4. Similarly, a space between part of the first guide member 55b cut to form an L-shape and the second guide member 56b forms a rail 58b of the slide member 43 of the movable member 4. The widths of the rails 58a and 58b in the Y direction are the same as a width D4 of a narrow width portion 57a of the recessed portion 57 in the Y direction.

The recessed portion 57 has the narrow width portion 57a having a wide width, and narrow width portions 57b and 57c disposed such that the narrow width portion 57a is sandwiched therebetween and having a narrower width only on the first guide members 55a and 55b side than the narrow width portion 57a. The narrow width portion 57b is in contact with the terminal installation region 53, the first guide member 55a, and the second guide member 56a (FIG. 9(a)). The narrow width portion 57c is in contact with the terminal installation region 54, the first guide member 55b, and the second guide member 56b.

The width D4 (FIG. 9(a)) of the narrow width portion 57a of the recessed portion 57 in the Y direction is wider than the width D2 (FIG. 8(d)) of the slide member 43 of the movable member 4. In addition, a length L5 (FIG. 9(a)) of the narrow width portion 57a of the recessed portion 57 in the X direction is longer than a length L4 (FIG. 8(d)) of the movable member 4 in the X direction and is longer than the length L1 (FIG. 7(a)) of the heat generation member 3 in the X direction. In addition, the cut portion 23 of the fuse element 2, the heat generation member 3, and the projection portion 44 of the movable member 4 are disposed at positions inside the narrow width portion 57a of the recessed portion 57 in a plan view. That is, the projection portion 44 is disposed at a position where at least part of the area of the recessed portion 57 on the inward side overlaps the outer circumference in a plan view, that is a position overlapping part of the cut portion 23. Therefore, in the protective element 100 of the present embodiment, when the cut portion 23 is cut, the projection portion 44 of the movable member 4 is inserted into the narrow width portion 57a of the recessed portion 57, and the heat generation member 3 is accommodated therein.

An edge portion in the cut portion 23 of the fuse element 2 on the first end portion 21 side is disposed at a position close to an inner wall surface 57d of the recessed portion 57. The length L5 of the narrow width portion 57a of the recessed portion 57 in the X direction is longer than the width in the cut portion 23 in the X direction (second direction). For this reason, if the cut portion 23 is cut, part of the fuse element 2 divided in the cut portion 23 is accommodated inside the recessed portion 57 in a bent manner.

When the inner wall surface 57d of the recessed portion 57 and the edge portion in the cut portion 23 on the first end portion 21 side are disposed at positions close to each other, a guideline for the distance therebetween is, for example, within a range of 0.1 mm to 0.5 mm and is preferably within a range of 0.2 m to 0.4 mm. When both are disposed at a position close to each other, the edge portion in the cut portion 23 on the first end portion 21 side is inserted while it comes into contact with the inner wall surface 57d of the recessed portion 57 when the projection portion 44 of the movable member 4 is inserted into the narrow width portion 57a of the recessed portion 57. As a result, it is easy for the edge portion in the cut portion 23 on the first end portion 21 side to be cut, which is preferable. If the distance between the inner wall surface 57d of the recessed portion 57 and the edge portion in the cut portion 23 on the first end portion 21 side is 0.2 mm or longer in a plan view, heat of the cut portion 23 can be prevented from being transferred to the recessed portion 57 and hindering softening of the fuse element 2, which is more preferable.

In addition, widths D5 (FIG. 9(a)) of the narrow width portions 57b and 57c of the recessed portion 57 in the Y direction are wider than the widths of the power supply members 73c and 74c (refer to FIG. 7(a)) in the Y direction. Furthermore, a length L6 (FIG. 9(a)) of the entire recessed portion 57 in the X direction is longer than the length (a width in the X direction) L1 (FIG. 7(a)) of the heat generation member 3. For this reason, when the cut portion 23 is cut, parts in the power supply members 73c and 74c which are separated from the cut portion 23 and cut in response to the cut of the cut portion 23 are accommodated inside the recessed portion 57 in a manner of bending along an edge portion of the recessed portion 57.

In addition, the width (length in the Y direction) D1 (FIG. 7(b)) of the heat generation member 3 in the Y direction is shorter than the dimensions of the depth (length in the Z direction) of the recessed portion 57. For this reason, even if the cut portion 23 is cut, the heat generation member 3 does not bend and is accommodated inside the recessed portion 57 while maintaining the entire shape.

In a central portion of the recessed member 5 on the lower surface 59b side, a protrusion portion 59 is disposed in a strip shape in the length direction of the recessed member 5. An apex portion 59a of the protrusion portion 59 is exposed from the case 7.

A material similar to that of the movable member 4 can be used as a material of the recessed member 5. It is preferable to use a nylon-based resin or a fluorine-based resin as a material of the recessed member 5 from the viewpoint of low cost and tracking resistance. The material of the recessed member 5 and the material of the movable member 4 may be the same or may be different.

When the recessed member 5 is formed of a material having a high heat conductivity, such as a ceramic material, heat generated when the fuse element 2 is cut can be efficiently dissipated to the outside, and continuation of arc discharge occurring when the fuse element 2 is cut is more effectively curbed.

The recessed member 5 may be produced using a material other than a resin, such as a ceramic material, and part of the recessed portion 57 may be covered with a nylon-based resin.

### (Pressing means)

The pressing means 6 applies a force so as to shorten the relative distance in a direction (Z direction) in which the cut portion 23 is sandwiched between the movable member 4 and the recessed member 5. The pressing means 6 in the protective element 100 of the present embodiment applies a force so as to shorten the relative distance of the movable member 4 in a direction (Z direction) in which the cut portion 23 is sandwiched between the movable member 4 and the recessed member 5.

For example, a known means such as a spring or a rubber capable of applying an elastic force can be used as the pressing means 6.

In the protective element 100 of the present embodiment, a spring is used as the pressing means 6. The spring (pressing means 6) is placed on the pressing means storage region 41a of the movable member 4 and is held in a contracted state.

A known material can be used as a material of the spring used as the pressing means 6.

A cylindrical spring may be used or a conical spring may be used as the spring used as the pressing means 6. When a conical spring is used as the pressing means 6, the side having a smaller outer diameter may be disposed facing the cut portion 23 side, or the side having a larger outer diameter may be disposed facing the cut portion 23 side.

Since the contraction length can be shortened, it is preferable to use a coil spring as the spring used as the pressing means 6, and it is more preferable to use a conical spring. In addition, when a conical spring is used as the pressing means 6, it is preferable that the side having a smaller outer diameter be disposed facing the cut portion 23 side. Accordingly, for example, when the spring is formed of a conductive material such as a metal, continuation of arc discharge occurring when the fuse element 2 is cut can be more effectively curbed. This is because it becomes easier to ensure the distance between the place where arc discharge occurs and the conductive material forming the spring. In addition, when a conical spring is used as the pressing means 6 and the side having a larger outer diameter is disposed facing the cut portion 23 side, it is preferable because an elastic force can be more uniformly applied from the pressing means 6 to the movable member 4.

### (Case)

The case 7 in the protective element 100 of the present embodiment accommodates the pressing means 6, the movable member 4, the fuse element 2, and the recessed portion 57 of the recessed member 5. The case 7 is constituted of two members, a first case 7a and a second case 7b which is disposed facing the first case 7a and is joined. The first case 7a and the second case 7b are the same.

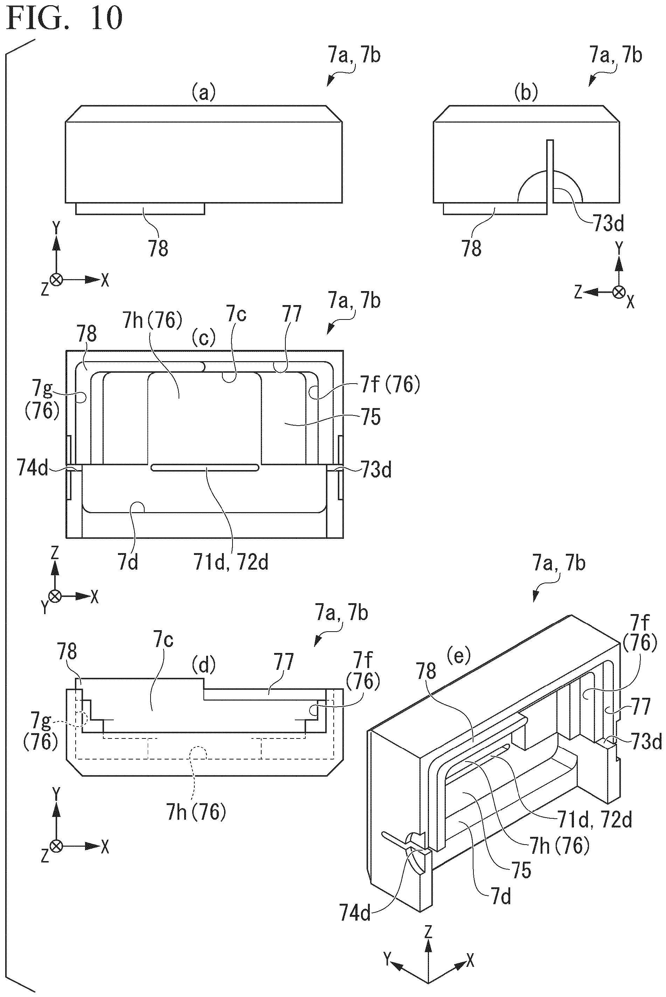

FIG. 10 is a diagram showing the first case 7a and the second case 7b used in the protective element 100 of the present embodiment. FIG. 10(a) is a plan view, FIG. 10(b) is a side view seen in the X direction, FIG. 10(c) is a side view seen in the Y direction, FIG. 10(d) is a bottom view, and FIG. 10(e) is a perspective view.

Each of the first case 7a and the second case 7b has substantially a rectangular parallelepiped shape in which the length of the surface in the Y direction is shorter than the length of the surface in the X direction. Accommodation portions 75, which are integrated when the first case 7a and the second case 7b are joined, are formed inside the first case 7a and inside the second case 7b, respectively. The accommodation portions 75 function as holding frames for holding the pressing means 6 in a contracted state. That is, the pressing means 6 is accommodated inside the case 7 in a state in which a force is applied so as to shorten the relative distance in a direction in which the cut portion 23 of the fuse element 2 is sandwiched between the movable member 4 and the recessed member 5. In each of the first case 7a and the second case 7b, one surface of two surfaces extending in the X direction is a surface disposed facing the other and serves as an opening portion of the accommodation portion 75.

The accommodation portions 75 respectively provided in the first case 7a and the second case 7b each have a first inner wall surface 7c, a second inner wall surface 7d, and side wall surfaces 76. The first inner wall surface 7c, the second inner wall surface 7d, and the side wall surfaces 76 in each of the accommodation portions 75 are integrally formed of the same member, and the first inner wall surface 7c, the second inner wall surface 7d, and the side wall surfaces 76 are integrated. In each of the first case 7a and the second case 7b, stress inside the case 7 occurring due to the pressing means 6 is supported and held by the first inner wall surface 7c, the side wall surfaces 76, and the second inner wall surface 7d in a clamp shape via the movable member 4 and the fuse element 2 in a state in which the fuse element 2 is not cut. Since the protective element 100 of the present embodiment includes the heat generation member 3, in each of the first case 7a and the second case 7b, stress inside the case 7 occurring due to the pressing means 6 is supported and held by the first inner wall surface 7c, the side wall surfaces 76, and the second inner wall surface 7d in a clamp shape via the movable member 4, the heat generation member 3, and the fuse element 2 in a state in which the fuse element 2 is not cut.

The first inner wall surface 7c and the second inner wall surface 7d are disposed facing each other in an extension/contraction direction (Z direction) of the pressing means 6. The first inner wall surface 7c forms a top surface of the accommodation portion 75. The first inner wall surface 7c is disposed in contact with the pressing means 6. The second inner wall surface 7d forms a bottom surface of the accommodation portion 75. The second inner wall surface 7d is disposed in contact with the lower surface 59b of the recessed member 5.

The first inner wall surface 7c and the second inner wall surface 7d form a frame-shaped structure together with the integrated side wall surfaces 76 and hold the pressing means 6 in a contracted state. Further, the first case 7a and the second case 7b are joined by coating steps 77 and 78 with an adhesive and by being disposed facing each other. For this reason, the protective element 100 of the present embodiment has an opening portion opening in the extension/contraction direction (Z direction) of the pressing means 6, for example. As in the case of using a case in which a lid is joined to an opening portion using an adhesive, without having stress from the pressing means 6 in a contracted state applied to a joining surface, the pressing means 6 can be stably held in a contracted state, and a pressing force of the pressing means 6 can be held for a long period of time.

The side wall surfaces 76 connect the first inner wall surface 7c and the second inner wall surface 7d in the extension/contraction direction (Z direction) of the pressing means 6 and forms the side surface of the accommodation portion 75. The side wall surfaces 76 have a first side wall surface 7h extending in the X direction, and a second side wall surface 7f and a third side wall surface 7g extending in the Y direction and disposed facing each other.

The opening portion 71d (or 72d) constituted of a penetration hole having substantially an oval shape slender in the X direction is provided in a center portion in the height direction (Z direction) at the center of the first side wall surface 7h in the X direction. The first terminal 71 (or the second terminal 72) penetrates the opening portion 71d (or 72d). Therefore, the width and the length of the opening portion 71d (or 72d) are determined in accordance with the shape of part of the first terminal 71 (or the second terminal 72) exposed from the case 7.

A slit 73d slender in the Y direction is provided at the center in the height direction (Z direction) in an edge portion on the second side wall surface 7f. A slit 74d slender in the Y direction is provided at the center in the height direction (Z direction) in an edge portion on the third side wall surface 7g.

The edge portion on the second side wall surface 7f of the first case 7a is integrated by being joined to the edge portion on the third side wall surface 7g of the second case 7b and forms one side surface extending in the Y direction of the case 7. In addition, the edge portion on the third side wall surface 7g of the first case 7a is integrated by being joined to the edge portion on the second side wall surface 7f of the second case 7b and forms the other side surface extending in the Y direction of the case 7. When the first case 7a and the second case 7b are joined, the slit 74d and the slit 73d are connected to each other. Accordingly, an opening portion constituted of a penetration hole having substantially an oval shape slender in the Y direction is formed in each of two side surfaces extending in the Y direction of the case 7. The third terminal 73 (or the fourth terminal 74) penetrates the formed opening portion. Therefore, the width and the length of the slit 74d and the slit 73d are determined in accordance with the shape of a part exposed from the case 7 of the third terminal 73 (or the fourth terminal 74).

The edge portion on the third side wall surface 7g on the first inner wall surface 7c side from the slit 74d has a larger thickness from the center position in the edge portion on the first inner wall surface 7c in the X direction, and the step 78 is formed with respect to an extension surface of an outer surface. The edge portion on the second side wall surface 7f on the first inner wall surface 7c side from the slit 73d has a smaller thickness from the center position in the edge portion on the first inner wall surface 7c in the X direction, and the step 77 is formed with respect to an extension surface of an inner surface. The steps 77 and 78 which are continuously formed in the edge portions on the first inner wall surface 7c and the side wall surfaces 76 are joining surfaces between the first case 7a and the second case 7b. The steps 77 and 78 prevent a positional deviation when the first case 7a and the second case 7b are joined, and the joining strength is improved by increasing the joining surfaces.

The shape of the first inner wall surface 7c, the second inner wall surface 7d, and the side wall surfaces 76 is a shape corresponding to the shape in which the pressing means 6, the movable member 4, the fuse element 2, and the recessed member 5 in a contracted state are laminated.

The case 7 in the present embodiment is used by disposing and joining the first case 7a and the second case 7b facing each other. The pressing means 6 is accommodated inside the case 7 in a contracted state.

A material similar to that of the movable member 4 can be used as a material of the case 7. The material of the case 7 and the material of the movable member 4 may be the same or may be different. When the case 7 is formed of a material having a high heat conductivity, such as a ceramic material, heat generated when the fuse element 2 is cut can be efficiently dissipated to the outside, and continuation of arc discharge occurring when the fuse element 2 is cut is more effectively curbed.

### (Method for manufacturing protective element)

Next, a method for manufacturing the protective element 100 of the present embodiment will be described.

First, the fuse element 2, the heat generation member 3, the first terminal 71, the second terminal 72, the third terminal 73, and the fourth terminal 74 are prepared. The thick portion 24 of the fuse element 2 and the heat transfer members 32 of the heat generation member 3 are connected by soldering. Next, the first end portion 21 of the fuse element 2 is connected to a part on the first terminal 71 by soldering. In addition, the second end portion 22 is connected to a part on the second terminal 72 by soldering. In the present embodiment, a known material can be used as a solder material used for soldering, and it is preferable to use a material having Sn as a main component from the viewpoint of the resistivity and the melting point.

The first end portion 21, the second end portion 22, the first terminal 71, and the second terminal 72 may be connected by welding joining or may be connected by mechanical joining such as rivet joining or screw joining, or a known joining method can be used.

Next, the power supply members 73c and 74c are prepared. Further, the power supply member 73c is connected to a part on the third terminal 73 by soldering. In addition, the power supply member 74c is connected to a part on the fourth terminal 74 by soldering. Next, the first power supply portion 35a, the second power supply portion 35b, and the power supply members 73c and 74c disposed on an upper surface of the heat generation member 3 are connected by a method of soldering, for example. The power supply members 73c and 74c and the third terminal 73 and the fourth terminal 74 may be connected by welding joining, or a known joining method can be used.

Next, the recessed member 5 is prepared. Further, the heat generation member 3 is placed on the recessed portion 57 of the recessed member 5. The first terminal 71 is installed on the terminal installation region 51, the second terminal 72 is installed on the terminal installation region 52, the third terminal 73 is installed on the terminal installation region 53, and the fourth terminal 74 is installed on the terminal installation region 54, respectively.

Next, the movable member 4 is prepared. Further, the movable member 4 is installed on the heat generation member 3 with the projection portion 44 facing the heat generation member 3 side. At this time, the slide member 43 of the movable member 4 is installed between the first guide members 55a and 55b and the second guide members 56a and 56b of the recessed member 5.

Next, the pressing means 6 is prepared. Further, the pressing means 6 is installed inside the pressing means storage region 41a of the movable member 4. A conical spring is installed inside the pressing means storage region 41a with the side having a smaller outer diameter facing the cut portion 23 side.

Next, the first case 7a and the second case 7b are prepared. Further, the first terminal 71 is caused to penetrate the opening portion 71d of the first case 7a. In addition, the first case 7a and the second case 7b are disposed facing each other, and the second terminal 72 is caused to penetrate the opening portion 72d of the second case 7b.

Thereafter, the first case 7a and the second case 7b are joined. When the first case 7a and the second case 7b are joined, the step 77 continuously formed in the edge portions of the first inner wall surface 7c and the side wall surfaces 76 of the first case 7a is joined to the step 78 continuously formed in the edge portions of the first inner wall surface 7c and the side wall surfaces 76 of the second case 7b, and the step 77 formed in the second case 7b is joined to the step 78 formed in the first case 7a.

An adhesive can be used as necessary for joining the first case 7a and the second case 7b. For example, an adhesive containing a heat curable resin can be used as the adhesive.

In addition, when the first case 7a and the second case 7b are joined, as necessary, the first case 7a and the recessed member 5, and/or the second case 7b and the recessed member 5 may be joined using an adhesive.

When the first case 7a and the second case 7b are joined, as shown in FIG. 2, the lower surface 59b of the recessed member 5 is disposed so as to be in contact with the second inner wall surface 7d of the first case 7a and the second case 7b. In addition, as shown in FIG. 2, the pressing means 6 is disposed in a contracted state so as to be in contact with the first inner wall surface 7c of the first case 7a and the second case 7b. Accordingly, the pressing means 6 in a contracted state is accommodated inside the accommodation portions 75 of the case 7.

In addition, when the first case 7a and the second case 7b are joined, the third terminal 73 (or the fourth terminal 74) is inserted into the slit 73d of the first case 7a and the slit 74d of the second case 7b which are disposed facing each other. As a result, by joining the first case 7a and the second case 7b, part of the third terminal 73 (or the fourth terminal 74) is in a state of being exposed to the outside of the case 7 through the opening portion formed by connecting the slit 74d and the slit 73d. Through the foregoing steps, the protective element 100 of the present embodiment is obtained.

### (Operation of protective element)

Next, operation of the protective element 100 of the present embodiment will be described. A case in which the first terminal 71 and the second terminal 72 of the protective element 100 are connected to an electrification path of an electronic instrument (for example, a battery pack) and the third terminal 73 and the fourth terminal 74 are connected to a current control circuit of the electronic instrument will be described.

When a current exceeding a rated current flows in an electrification path of an electrical instrument, a current exceeding the rated current flows in the fuse element 2 of the protective element 100. In this case, the cut portion 23 of the fuse element 2 has a larger heat generation amount than the parts other than the cut portion 23. For this reason, the temperature of the cut portion 23 reaches or exceeds the softening temperature and the cut portion 23 softens faster than the parts other than the cut portion. Further, as the cut portion 23 softens, the cut portion 23 is cut due to a pressing force applied from the pressing means 6 via the projection portion 44 of the movable member 4 and the heat generation member 3 so that electrification to the electrification path of the electrical instrument is blocked. Therefore, in the protective element 100, the amount of heat generated when the fuse element 2 is cut can be small, and arc discharge itself occurring when the cut portion 23 is cut can be reduced.

When an abnormality other than a flow of a current exceeding the rated current in the electrification path of the electrical instrument occurs, a current is supplied between the third terminal 73 and the fourth terminal 74 by the current control circuit. Due to this current, the resistors 33 generate heat, and the heat is transferred to the cut portion 23 of the fuse element 2 via the heat transfer members 32, thereby softening the cut portion 23. Further, as the cut portion 23 softens, similar to the case in which a current exceeding the rated current flows in the electrification path of the electrical instrument, the cut portion 23 is cut due to a pressing force applied from the pressing means 6 via the projection portion 44 of the movable member 4 and the heat generation member 3 so that electrification to the electrification path of the electrical instrument is blocked.

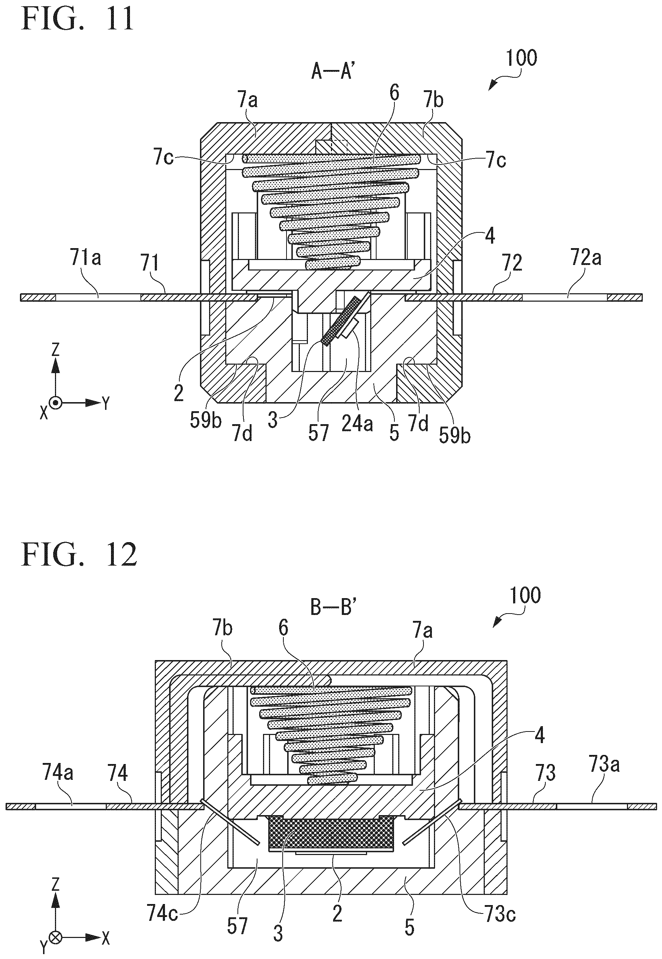

FIGS. 11 and 12 are diagrams showing a state after the cut portion 23 of the fuse element 2 is cut. FIG. 11 is a cross-sectional view corresponding to FIG. 2 and is a cross-sectional view of the protective element 100, in which the cut portion 23 of the fuse element 2 is cut, cut along line A-A' shown in FIG. 1(a). FIG. 12 is a cross-sectional view corresponding to FIG. 3 and is a cross-sectional view of the protective element 100, in which the cut portion 23 of the fuse element 2 is cut, cut along line B-B' shown in FIG. 1(a).

In the protective element 100 of the present embodiment, if the cut portion 23 of the fuse element 2 is cut, as shown in FIGS. 11 and 12, the fuse element 2 bends along the edge portion of the recessed portion 57 of the recessed member 5 and is accommodated inside the recessed portion 57 of the recessed member 5 together with the heat generation member 3. Therefore, the electrification path via the fuse element 2 is physically reliably blocked. In addition, as the fuse element 2 bends along the edge portion of the recessed portion 57, the distance between cut surfaces of the fuse element 2 quickly increases. As a result, even if arc discharge occurs when the fuse element 2 is cut, arc discharge is promptly reduced. Therefore, for example, even when the protective element 100 of the present embodiment is installed in a high-voltage/large-current current path, continuation of arc discharge occurring when the fuse element 2 is cut can be curbed.

As described above, in the protective element 100 of the present embodiment, the movable member 4 and the recessed member 5 are disposed facing each other such that the cut portion 23 of the fuse element 2 is sandwiched therebetween, and the pressing means 6 applying a force so as to shorten the relative distance in a direction in which the cut portion 23 is sandwiched between the movable member 4 and the recessed member 5 is provided. For this reason, the cut portion 23 is cut at a temperature equal to or higher than the softening temperature of the fuse element 2. As a result, in the protective element 100 of the present embodiment, the amount of heat generated when the fuse element 2 is cut can be small, and arc discharge occurring when it is cut can be reduced. In addition, in the protective element 100 of the present embodiment, due to a pressing force of the pressing means 6, the cut fuse element 2 is accommodated in the recessed member 5 together with the movable member 4. Accordingly, the distance between the cut surfaces of the fuse element 2 quickly increases. As a result, even if arc discharge occurs when the fuse element 2 is cut, arc discharge is promptly reduced.

In the protective element 100 of the present embodiment constituted as above, since the cut portion 23 of the fuse element 2 has the penetration hole 23b, when a current exceeding the rated current flows in the fuse element 2, the temperature of the cut portion 23 is more likely to reach or exceed the softening temperature and the cut portion 23 is more likely to soften than the parts other than the cut portion. For this reason, it is possible to shorten the time until the cut portion 23 is cut due to a pressing force from the pressing means 6 after a current exceeding the rated current has flowed. Thus, according to the protective element 100 of the present embodiment, occurrence of arc discharge when the cut portion 23 of the fuse element 2 is cut can be reduced, and continuation of arc discharge that has occurred can be curbed. In addition, since there is no need for the cut portion 23 of the fuse element 2 to have a narrower width than the parts other than the cut portion 23, a cut of the cut portion 23 of the fuse element 2 due to a temperature environment is unlikely to occur.

In the protective element 100 of the present embodiment, when the largest diameter of the penetration hole 23b is within a range of 15% to 25% of the length in the X direction (second direction) orthogonal to the Y direction (first direction) of the cut portion 23, the time until the cut portion 23 is cut after a current exceeding the rated current has flowed can be reliably shortened, and the strength of the cut portion 23 of the fuse element 2 can be maintained within a range causing no practical problems.

In the protective element 100 of the present embodiment, when the fuse element 2 has the thick portion 24 having a larger thickness than the flat surface portion 23a of the cut portion 23 in at least a part other than the cut portion 23, since the temperature of the parts other than the cut portion 23 is unlikely to rise, arc discharge is less likely to occur when the cut portion 23 of the fuse element 2 is cut.

In the protective element 100 of the present embodiment, when the thickness of the thick portion 24 is within a range of 150% to 250% with respect to the thickness of the flat surface portion 23a of the cut portion 23, since the temperature of the parts other than the cut portion 23 is unlikely to rise more reliably, arc discharge is less likely to occur more reliably when the cut portion 23 of the fuse element 2 is cut.

In the protective element 100 of the present embodiment, when the length in the X direction (second direction) orthogonal to the Y direction (first direction) of the thick portion 24 is longer than the length of the cut portion 23 in the X direction, since the amount of heat which can be absorbed by the thick portion 24 increases and the temperature of the parts other than the cut portion 23 is even less likely to rise, the fuse element 2 can be cut more reliably in the cut portion 23 thereof.

In the protective element 100 of the present embodiment, when the length of the thick portion 24 in the Y direction (second direction) is within a range of 120% to 160% with respect to the length of the cut portion 23 in the Y direction, since the amount of heat which can be absorbed by the thick portion 24 reliably increases and the temperature of the parts other than the cut portion 23 is unlikely to rise even more reliably, the fuse element 2 can be cut even more reliably in the cut portion 23.

In the protective element 100 of the present embodiment, when the cut portion 23 of the fuse element 2 is disposed on the inward side of the recessed portion 57 of the recessed member 5 in a plan view and is disposed at a position close to the inner surface of the recessed portion 57 of the recessed member 5 in a plan view, since the fuse element 2 bends along the edge portion of the recessed portion 57 of the recessed member 5, the distance between the cut surfaces of the fuse element 2 quickly increases. For this reason, even if arc discharge occurs when the fuse element 2 is cut, arc discharge is promptly reduced.

In the protective element 100 of the present embodiment, when the heat generation member 3 is provided, even when an abnormality other than a flow of a current exceeding the rated current in the electrification path occurs, the heat generation member 3 is electrified, and therefore the fuse element 2 can be cut in the cut portion 23.

### (Modification example)

In the protective element 100 of the present embodiment, one penetration hole 23b is provided in the cut portion 23 of the fuse element 2, but the number of penetration holes 23b of the cut portion 23 is not limited to this. In addition, a thin portion may be provided instead of the penetration hole 23b or together with the penetration hole 23b. Moreover, instead of forming the thick portion 24 by adhering the fuse element 2 and the metal foil 24a, the thickness of the fuse element 2 may be partially increased.

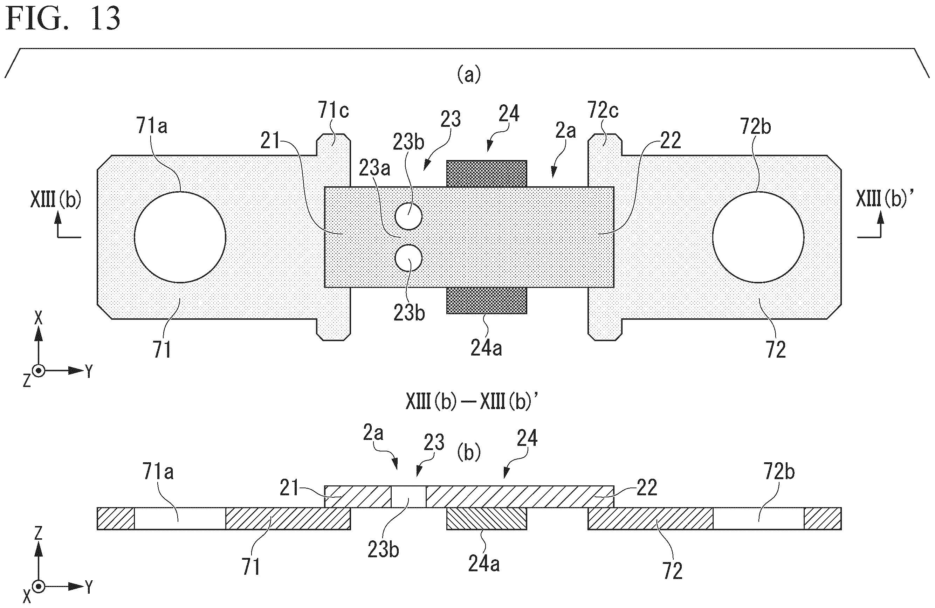

FIG. 13 is a diagram showing a modification example of a fuse element used in the protective element according to the present invention. FIG. 13(a) is a plan view, and FIG. 13(b) is a cross-sectional view along line XIII(b)-XIII(b)' in FIG. 13(a).

A fuse element 2a shown in FIG. 13 is the same as the fuse element 2 used in the protective element 100 except that two penetration holes 23b are provided in the cut portion 23. For this reason, the same reference signs are applied to the same members as those of the protective element 100, and description thereof will be omitted.

Two penetration holes 23b are disposed in the X direction (second direction). There may be three or more penetration holes 23b. When there are three or more penetration holes 23b, it is preferable that the penetration hole 23b be disposed at equal intervals. When there are two or more penetration holes 23b, the largest diameter of the penetration hole is the total value of the largest diameters of the penetration holes 23b. In the protective element 100 of the present embodiment, there is no particular limitation on the number of penetration holes 23b, but it is preferably within a range of 1 to 3.

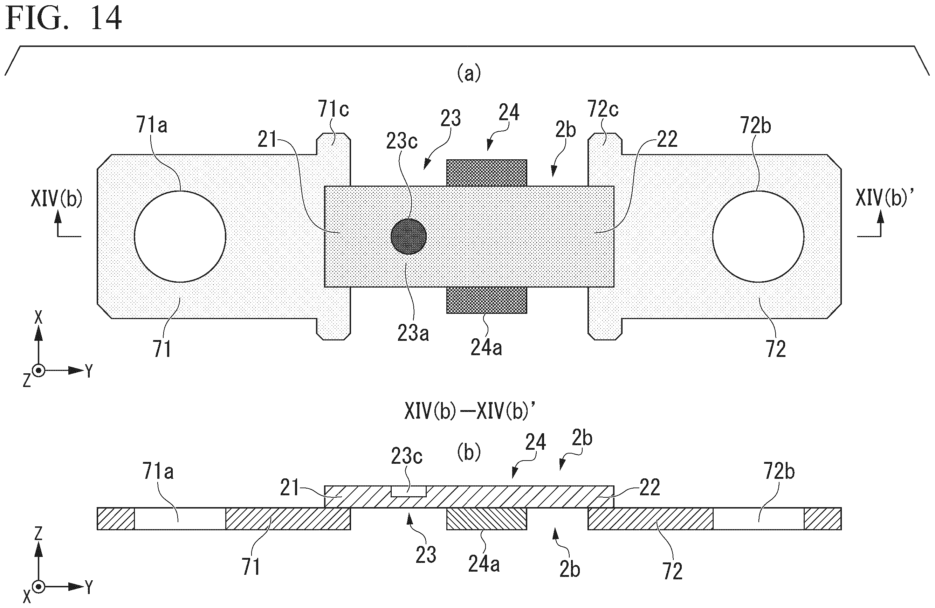

FIG. 14 is a diagram showing an modification example of a fuse element used in the protective element according to the present invention. FIG. 14(a) is a plan view, and FIG. 14(b) is a cross-sectional view along line XIV(b)-XIV(b)' in FIG. 14(a).

A fuse element 2b shown in FIG. 14 is the same as the fuse element 2 used in the protective element 100 except that a thin portion 23c is provided in the cut portion 23. For this reason, the same reference signs are applied to the same members as those of the protective element 100, and description thereof will be omitted.

The thin portion 23c is a part having a smaller thickness than the flat surface portion 23a. It is preferable that the thickness of the thin portion 23c be within a range of 10% to 40% with respect to the thickness of the flat surface portion 23a. In the fuse element 2b, the thin portion 23c is formed by cutting the upper surface (a surface on a side opposite to the side where the metal foil 24a is adhered). A method for forming the thin portion 23c is not limited to this. The thin portion 23c may be formed by cutting a lower side surface (a surface on the side where the metal foil 24a is adhered).

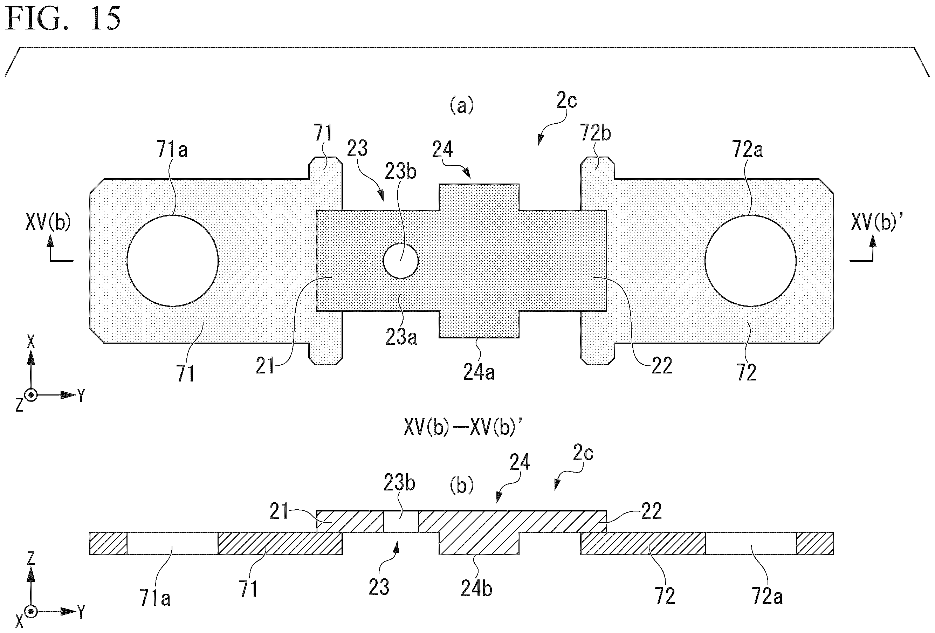

FIG. 15 is a diagram showing a modification example of a fuse element used in the protective element according to the present invention. FIG. 15(a) is a plan view, and FIG. 15(b) is a cross-sectional view along line XV(b)-XV(b)' in FIG. 15(a).

A fuse element 2c shown in FIG. 15 is the same as the fuse element 2 used in the protective element 100 except that the thick portion 24 is provided by providing an extension portion 24b which is part of the fuse element having an increased thickness. For this reason, the same reference signs are applied to the same members as those of the protective element 100, and description thereof will be omitted.

The extension portion 24b also has a larger length in the X direction (width direction) of the fuse element 2c. For example, the fuse element 2c can be manufactured by press molding using a mold.

In the protective element 100 of the present embodiment, the resistors 33, the first power supply portion 35a, and the second power supply portion 35b are disposed on the upper surface (a surface on the movable member 4 side) of the insulation substrate 31 in the heat generation member 3, but positions where the resistors 33, the first power supply portion 35a, and the second power supply portion 35b are disposed are not limited to this. For example, the resistors 33 may be disposed on the lower surface (a surface on the fuse element 2 side) of the insulation substrate 31, and the first power supply portion 35a and the second power supply portion 35b may be disposed on the upper surface of the insulation substrate 31. In addition, in the protective element 100 of the present embodiment, the heat generation member 3 is disposed on the upper surface (a surface on the movable member 4 side) of the fuse element 2, but the heat generation member 3 may be disposed on the lower surface (a surface on the recessed member 5 side) of the fuse element 2.

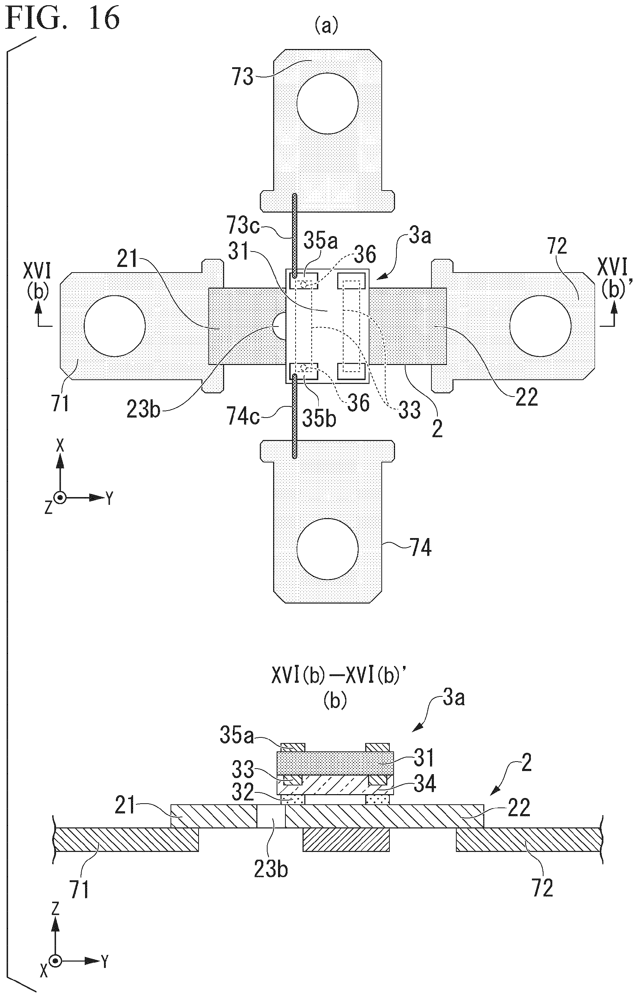

FIG. 16 is a diagram showing a modification example of a heat generation member used in the protective element according to the present invention. FIG. 16(a) is a plan view, and FIG. 16(b) is a cross-sectional view along line XVI(b)-XVI(b)' in FIG. 16(a). A heat generation member 3a shown in FIG. 16 is the same as the heat generation member 3 used in the protective element 100 except that the resistors 33 are disposed on the lower surface of the insulation substrate 31 and the first power supply portion 35a and the second power supply portion 35b are disposed on the upper surface of the insulation substrate 31. For this reason, the same reference signs are applied to the same members as those of the protective element 100, and description thereof will be omitted.

In the heat generation member 3a, the resistors 33 and the first power supply portion 35a, and the resistors 33 and the second power supply portion 35b are electrically connected to each other via through holes (not shown) formed in the insulation substrate 31.

### REFERENCE SIGNS LIST

2, 2a, 2b, 2c Fuse element
21 First end portion
22 Second end portion
23 Cut portion
23a Flat surface portion
23b Penetration hole
23c Thin portion
24 Thick portion
24a Metal foil
24b Extension portion
3, 3a Heat generation member
31 Insulation substrate
32 Heat transfer member
33 Resistor
34 Protective layer
35a First power supply portion
35b Second power supply portion
4 Movable member
41 Base portion
41a Pressing means storage region
42 Extension region
43 Slide member
44 Projection portion
44a Central portion
44b End portion
5 Recessed member
51, 52, 53, 54 Terminal installation region
55a, 55b First guide member
56a, 56b Second guide member
56b Second guide member
57 Recessed portion
57a Narrow width portion
57b, 57c Narrow width portion
57d Inner wall surface
58a, 58b Rail
59 Protrusion portion
59a Apex portion
59b Lower surface
6 Pressing means
7 Case
7a First case
7b Second case
7c First inner wall surface
7d Second inner wall surface
7f Second side wall surface
7g Third side wall surface
7h First side wall surface
71 First terminal
72 Second terminal
73 Third terminal
74 Fourth terminal
71a, 72a, 73a, 74a External terminal hole
71b, 72b, 73b, 74b Flange portion
71d, 72d Opening portion
73c, 74c Power supply member
73d, 74d Slit
75 Accommodation portion
76 Side wall surface
77 Step
78 Step
100 Protective element

## Claims

1. A protective element comprising:
a fuse element having a cut portion between a first end portion and a second end portion and electrified in a first direction from the first end portion toward the second end portion;
a movable member having a projection portion, and a recessed member, having a recessed portion allowing the projection portion to be inserted therein, which are disposed facing each other such that the cut portion is sandwiched therebetween; and
a pressing means applying a force so as to shorten a relative distance in a direction in which the cut portion is sandwiched between the movable member and the recessed member,
wherein the cut portion is cut due to the force of the pressing means at a temperature equal to or higher than a softening temperature of the fuse element, and
the cut portion of the fuse element has one of or both a penetration hole and a thin portion in at least part thereof.

2. The protective element according to claim 1,
wherein largest diameters of the penetration hole and the thin portion are within a range of 15% to 25% of a length of the cut portion in a second direction orthogonal to the first direction.

3. The protective element according to claim 1,
wherein the fuse element has a thick portion having a larger thickness than a flat surface part of the cut portion excluding the penetration hole and the thin portion in at least a part other than the cut portion.

4. The protective element according to claim 3,
wherein the thickness of the thick portion is within a range of 150% to 250% with respect to the thickness of the flat surface part of the cut portion.

5. The protective element according to claim 3,
wherein a length of the thick portion in a second direction orthogonal to the first direction is longer than a length of the cut portion in the second direction.

6. The protective element according to claim 5,
wherein the length of the thick portion in the second direction is within a range of 120% to 160% with respect to the length of the cut portion in the second direction.

7. The protective element according to claim 1 or 2,
wherein the cut portion is disposed on an inward side of the recessed portion of the recessed member in a plan view and is disposed at a position close to an inner surface of the recessed portion of the recessed member in a plan view.

8. The protective element according to claim 1,
wherein the fuse element is a laminate having an inner layer made of a low-melting point metal and an outer layer made of a high-melting point metal.

9. The protective element according to claim 8,
wherein the low-melting point metal is constituted of Sn or a metal having Sn as a main component, and the high-melting point metal is constituted of Ag or Cu or a metal having Ag or Cu as a main component.

10. The protective element according to claim 3,
wherein part of the thick portion having a larger thickness than the flat surface part of the cut portion is constituted of Sn or a metal having Sn as a main component, or Ag or Cu or a metal having Ag or Cu as a main component.

11. The protective element according to claim 1,
wherein the pressing means is a spring.

12. The protective element according to claim 11,
wherein the spring is a conical spring and is disposed with a side having a smaller outer diameter facing the cut portion side.

13. The protective element according to claim 1 or 2,
wherein the projection portion of the movable member is disposed at a position where an outer circumference overlaps at least part of an area on an inward side of the recessed portion of the recessed member in a plan view, and
when the cut portion is cut, the projection portion is inserted into the recessed portion.

14. The protective element according to claim 1 or 2,
wherein a first terminal is electrically connected to the first end portion, and a second terminal is electrically connected to the second end portion.

15. The protective element according to claim 1 further comprising:
a heat generation member disposed in contact with or disposed at a position close to the cut portion on the pressing means side or the recessed member side of the fuse element.

16. The protective element according to claim 15,
wherein the heat generation member is disposed on an inward side of the recessed portion of the recessed member in a plan view.

17. The protective element according to claim 15 or 16,
wherein a length of the heat generation member in the first direction is shorter than a length of the recessed portion in a third direction intersecting the second direction intersecting the first direction and the first direction.

18. The protective element according to claim 15,
wherein the heat generation member has a resistor, and the resistor is disposed close to the cut portion side of the heat generation member.

19. The protective element according to claim 18,
wherein the resistor is in contact with the fuse element in the second direction intersecting the first direction or is in contact with the fuse element in the second direction intersecting the first direction via the heat generation member.

20. The protective element according to claim 15,
wherein the heat generation member is electrically connected to a third terminal or the third terminal and a fourth terminal through a power supply member, and the resistor generates heat due to electrification via the power supply member.

21. The protective element according to claim 1 further comprising:
a case constituted of a plurality of members in which at least the fuse element, the movable member, the recessed portion of the recessed member, and the pressing means are accommodated,
wherein the pressing means is accommodated inside the case in a state in which a force is applied such that a relative distance in a direction in which the cut portion is sandwiched between the movable member and the recessed member is shortened.

22. The protective element according to claim 21,
wherein one member of the case has an accommodation portion in which a first inner wall surface and a second inner wall surface facing each other in an extension/contraction direction of the pressing means and side wall surfaces connecting the first inner wall surface and the second inner wall surface are integrally formed of the same member, and
in a state in which the fuse element is not cut, stress inside the case occurring due to the pressing means is supported and held by the first inner wall surface, the side wall surfaces, and the second inner wall surface in a clamp shape.

23. The protective element according to claim 21,
wherein the recessed member and the case are made of nylon or ceramics.

24. The protective element according to claim 1 or 2,
wherein the cut portion is disposed inside the recessed portion of the recessed member in a plan view and is disposed at a position close to an inner surface of the recessed portion in a plan view,
the movable member is at a position where an outer circumference overlaps at least part of an area on an inward side of the recessed portion in a plan view, and the projection portion is disposed at a position overlapping part of the cut portion, and
when the cut portion of the fuse element is cut, the projection portion is inserted into the recessed portion, and part of the fuse element is accommodated inside the recessed portion in a bent manner.
